# EUROPÄISCHE PATENTSCHRIFT

(11) **EP 0 814 102 B1**
(45) Veröffentlichungstag und Bekanntmachung des Hinweises auf die Patenterteilung: **14.11.2001**
(21) Anmeldenummer: 97109457.8
(22) Anmeldetag: 11.06.1997
(51) Int. Cl.: C08F 283/00, C09D 151/08

(54) **Pfropfpolymerisate von ungesättigten Monomeren auf modifizierte Polyharnstoffe, Verfahren zu ihrer Herstellung und ihre Verwendung**
Graft polymers from unsaturated monomers onto modified polyurea, their preparation process and use
Polymères greffés de monomères insaturés sur des polyurées modifiées, leur procédé de préparation et leur utilisation

(30) Priorität: 21.06.1996 DE 19624818
(43) Veröffentlichungstag der Anmeldung: 29.12.1997
(73) Patentinhaber: BAYER AG, 51368 Leverkusen (DE)
(72) Erfinder: Probst, Joachim, Dr., 51375 Leverkusen (DE); Hassel, Tillmann, Dr., 51061 Köln (DE); Münzmay, Thomas, Dr., 41539 Dormagen (DE)

(56) Entgegenhaltungen:
- EP-A- 0 156 155
- EP-A- 0 538 649

## Beschreibung

Die Erfindung betrifft neue Pfropfpolymerisate aus ethylenisch ungesättigten Monomeren als Pfropfmonomere auf anionisch modifizierte Polyharnstoffe als Pfropfgrundlage. Der Begriff "Polyharnstoffe" im Sinn dieser Erfindung schließt Polyurethanharnstoffe ein. Die Erfindung betrifft weiterhin ein Verfahren zur Herstellung dieser neuen Pfropfpolymerisate und ihre Verwendung als Bindemittel für die Beschichtung beliebiger Substrate, wie z.B. Leder.

Die als Pfropfgrundlage eingesetzten anionisch modifizierten Polyharnstoffe mit in die Polymerkette eingebauten N-Cyanaminocarbonylharnstoffgruppen bzw. endständigen Cyanharnstoffgruppen sind bekannt (DE-OS 41 33 572 & EP-A-156 155), US-PS 5 284 928).

Aus derartigen Dispersionen erhaltene Beschichtungen sind weniger hydrophil als Beschichtungen aus vergleichbaren Sulfonat- oder Carboxylatgruppen enthaltenden Polyurethan-Dispersionen, weil die hydrophilierenden N-Cyanaminocarbonylharnstoff- bzw. Cyanharnstoffanionen nach Verlust des Gegenions selbstvernetzenden Charakter erhalten und nach erfolgter Vernetzung ihre Hydrophilie verlieren. Deshalb besitzen diese unter Verwendung derartiger Dispersionen hergestellten Beschichtungen z.B. auf Leder generell bei den physikalischen Naßechtheiten ein höheres Niveau als die vergleichbaren sulfonat- oder carboxylatmodifizierten Polyurethan-Dispersionen.

Es ist weiterhin bekannt, daß Polyacrylat-Dispersionen besonders in "harten" Einstellungen Schwächen im Knickverhalten aufweisen; dieser Nachteil kann auch durch Abmischung mit Polyurethan-Dispersionen nicht immer ausgeglichen werden (vgl. W. Wenzel, Leder- und Häutemarkt, 23, S. 111, 1991). Darüber hinaus müssen wäßrige Finishe auf Leder nahezu immer vernetzt werden, um die geforderten physikalischen Naßechtheiten zu erreichen (vgl. H. Träubel, Journal of the Society of Leather Technologists and Chemists, 1, S. 7, 1990; H. Will u. K. Fischer, Journal of the American Leather Chemist's Association, 86, S. 49, 1991).

Diese Vernetzung ist aus den obengenannten Gründen notwendig, aber unerwünscht, weil sie zu erheblichen Zwischenhaftungsproblemen beim Überspritzen fertig zugerichteter Leder führt. Darüber hinaus bedeutet der Einsatz von Vernetzern immer das Arbeiten mit 2K-Systemen mit begrenzter Topfzeit der Ansätze, was ebenfalls nachteilig ist.

Es wurde nun gefunden, daß man zur Zurichtung von Leder hervorragend geeignete Produkte, die auch unvernetzt außergewöhnlich gute Naßreibechtheiten und Knickechtheiten liefern, dann erhält, wenn man auf die obengenannten, anionisch modifizierten Polyharnstoffe ungesättigte Monomere radikalisch aufpfropft. Es wurde weiterhin gefunden, daß dieser positive Effekt auch dann auftritt, wenn die Menge des als Pfropfgrundlage eingesetzten Polyharnstoffs, bezogen auf die Menge der Vinylmonomeren, bemerkenswert niedrig ist.

Dieser Befund ist deswegen überraschend, weil schon aus der oben zitierten Literatur hervorgeht, daß es zwar möglich ist, das Knickverhalten reiner Polyacrylate durch Abmischen mit Polyurethanen zu verbessern, daß jedoch zum Erreichen des geforderten Echtheitsniveaus eine externe Vernetzung zwingend notwendig ist.

Gegenstand der Erfindung ist also ein Verfahren zur Herstellung von Pfropfpolymerisaten aus
A. 5 bis 95, vorzugsweise 10 bis 90 Gew.-Teilen polymerisierbarem olefinisch ungesättigtem Monomer als Pfropfmonomer auf
B. 95 bis 5, vorzugsweise 90 bis 10 Gew.-Teile Polyharnstoff, der pro 100 g B 10 bis 100 Milliäquivalente der Gruppe 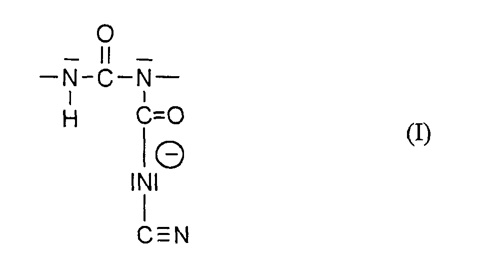 und gegebenenfalls bis zu 50 Milliäquivalente der Gruppe 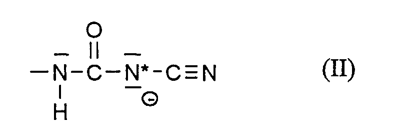 enthält, als Pfropfgrundlage,
wonach man Monomer A in Gegenwart der Pfropfgrundlage B und Radikal-bildender Polymerisationsinitiatoren in wäßriger Emulsion polymerisiert.

Weiterer Gegenstand der Erfindung sind nach diesem Verfahren erhältliche Pfropfpolymerisate mit einem als Zahlenmittel bestimmten Molekulargewicht von 1 000 bis 5 10⁵, vorzugsweise von 5 000 bis 2 · 10⁵ g · mol⁻¹ (ohne eventuelle vernetzte Anteile).

Die modifizierten Polyharnstoffe B können aus
I) organischen Polyisocyanaten a) und
II) polyfunktionellen NCO-reaktiven Verbindungen aus der Reihe
   b) Polyhydroxylverbindungen,
   c) Polyamine,
   d) Aminoalkohole,
   und gegebenenfalls
III) monofunktionellen NCO-reaktiven Verbindungen e) und gegebenenfalls
IV) Wasser f) hergestellt werden, beispielsweise über ein Präpolymer,
wobei man zunächst aus den Komponenten a), höhermolekularen und gegebenenfalls niedermolekularen Komponenten b), c) und/oder d) ein NCO-Präpolymerisat mit einem NCO-Gehalt von 0,5 bis 10, vorzugsweise 1,5 bis 7,5 Gew.-% herstellt und dieses mit niedermolekularen Verbindungen b), c), d) und/oder f) Wasser umsetzt.

Nach einer bevorzugten Ausführungsform werden die für die Herstellung der erfindungsgemäßen modifizierten Polyharnstoffe geeigneten unmodifizierten Polyharnstoffe durch Kettenverlängerung eines NCO-Präpolymerisats mit niedermolekularen Verbindungen aus der Reihe Polyamine und Aminoalkohole bis zu einem Umsatz der NCO-Gruppen des Präpolymerisats von 30 bis 95, vorzugsweise 50 bis 80 % und anschließende Kettenverlängerung mit Wasser hergestellt.

Bei der Herstellung des NCO-Präpolymers werden als Aufbaukomponenten a) zur Einführung der Oxadiazintrion- und/oder Uretdion-Struktureinheiten der Formeln

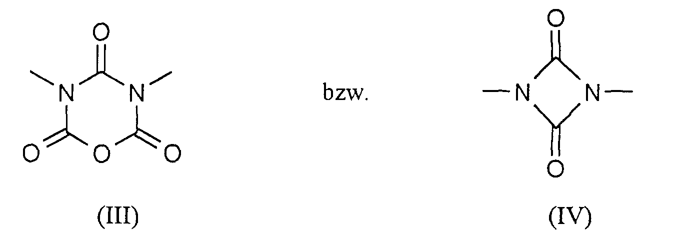

Diisocyanate der Formeln (VI) und/oder (VII) 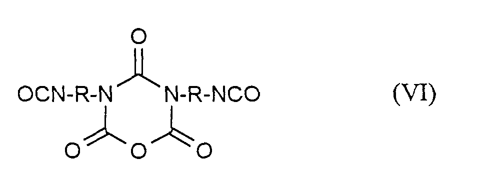 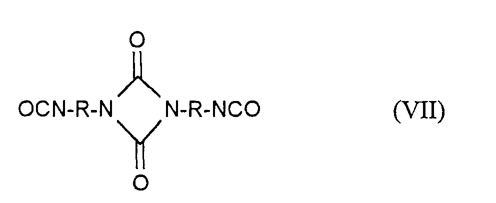 worin
- R: unabhängig voneinander für den zweiwertigen Rest eines aliphatischen Kohlenwasserstoffs mit 1 bis 15 C-Atomen, eines cycloaliphatischen Kohlenwasserstoffs mit 3 bis 15 C-Atomen, eines araliphatischen Kohlenwasserstoffs mit 7 bis 15 C-Atomen oder eines aromatischen Kohlenwasserstoffs mit 6 bis 12 C-Atomen steht,
mitverwendet, wobei deren Menge so bemessen wird, daß der resultierende Polyharnstoff vor der Umsetzung mit den Cyanamidsalzen der Formel 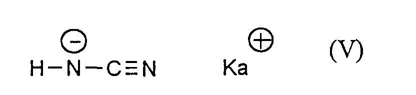 worin
- Ka^{⊕}: für ein Alkali- oder ein gegebenenfalls substituiertes Ammoniumion steht,
einen Gehalt von 10 bis 180, vorzugsweise 15 bis 100 Milliäquivalenten an reaktiven Gruppen der Formeln (III) und/oder (IV), bezogen auf 100 g unmodifizierten Polyharnstoff, aufweist.

Die Reaktion von Cyanamidsalzen (V) mit den Oxadiazintrion- bzw. Uretdionstrukturen der Formeln (III) bzw. (IV) kann durch folgendes Reaktionsschema dargestellt werden:

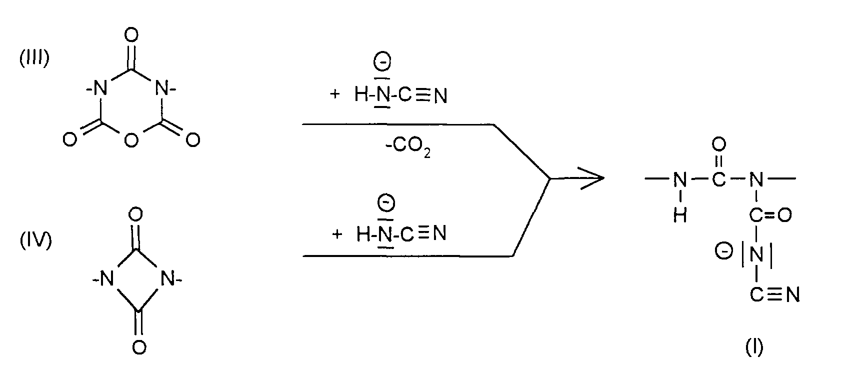

Die unter a) als Aufbaukomponenten verwendeten Diisocyanate der Formeln (VI) und (VII) sind unter den Bedingungen der Präpolymerherstellung gegenüber Polyhydroxyl-Komponenten b) nur bezüglich der Isocyanatgruppen reaktiv, die Oxadiazintrion- bzw. die Uretdionstrukturen bleiben erhalten. Beispiele für derartige Polyisocyanate sind 1,3-Bis-(5-isocyanato-1,3,3-trimethyl-cyclohexylmethylen)-2,4-dioxo-1,3-diazetidin; 1,3-Bis-(3-isocyanato-4-methylphenyl)-2,4-dioxo-1,3-diazetidin; 1,3-Bis-(6-isocyanato-hexyl)-2,4-dioxo-1,3-diazetidin; 3,5-Bis-(5-isocyanato-1,3,3 -trimethyl-cyclohexyl-methylen)-2,4,6-trioxo-tetrahydro-1,3,5-oxadiazin; 3,5-Bis-(4-isocyanato-cyclohexyl)-2,4,6-trioxo-tetrahydro-1,3,5-oxadiazin und 3,5-Bis-(6-isocyanato-hexyl)-2,4,6-trioxo-tetrahydro-1,3,5-oxadiazin (Desmodur® LB 202, Bayer AG).

Von den Isocyanaten der Formeln (VI) und (VII) werden diejenigen der Oxadiazintrion-Reihe (VI) bevorzugt eingesetzt, besonders bevorzugt 3,5-Bis-(6-isocyanato-hexyl)-2,4,6-trioxo-tetrahydro-1,3,5-oxadiazin. Die Polyisocyanate der Formel (VI) und (VII) sind z.T. technische Produkte. Bei diesen kann die Isocyanatfunktionalität größer als zwei sein und das Molekulargewicht kann über dem für Reinstoffe geltenden Wert liegen. Diese technischen Produkte können selbstverständlich bei der Durchführung des erfindungsgemäßen Verfahrens eingesetzt werden. Zur Vermeidung einer unerwünschten Vernetzung kann es gegebenenfalls erforderlich sein, in an sich bekannter Weise durch Mitverwendung von monofunktionellen NCO-reaktiven Komponenten, wie z.B. Monoolen, bei der NCO-Präpolymerherstellung diese erhöhte Funktionalität auszugleichen.

Weiterhin sind als Aufbaukomponenten a) beliebige organische Verbindungen geeignet, die mindestens zwei freie Isocyanatgruppen pro Molekül aufweisen. Vorzugsweise werden Diisocyanate X(NCO)₂ eingesetzt, wobei X für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoffatomen, einen zweiwertigen aromatischen Kohlenwasserstoffrest mit 6 bis 15 Kohlenstoffatomen oder einen zweiwertigen araliphatischen Kohlenwasserstoffrest mit 7 bis 15 Kohlenstoffatomen steht.

Beispiele derartiger bevorzugt einzusetzender Diisocyanate sind Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan, 4,4'-Diisocyanato-dicyclohexyl-methan, 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, p-Xylylendiisocyanat, p-Isopropylidendiisocyanat sowie aus diesen Verbindungen bestehende Gemische.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate (mit)zuverwenden.

"Polyfunktionelle NCO-reaktive Verbindungen" im Sinne der Erfindung sind solche Verbindungen, die pro Molekül durchschnittlich 1,8 bis 4, vorzugsweise 1,8 bis 2,5 NCO-reaktive Gruppen aufweisen, wobei als NCO-reaktive Gruppen hauptsächlich Hydroxylgruppen sowie primäre und sekundäre Aminogruppen in Frage kommen.

Als Polyhydroxylverbindungen b) werden bevorzugt höhermolekulare Verbindungen aus den Klassen der Polyester-, Polyesteramid-, Polycarbonat-, Polyacetal- und Polyetherpolyole mit mittleren Molekulargewichten von mindestens 500, bevorzugt 500 bis 8 000, besonders bevorzugt 800 bis 5 000, eingesetzt.

Als Polyesterpolyole kommen insbesondere lineare Polyesterdiole oder auch schwach verzweigte Polyesterpolyole in Betracht, wie sie in bekannter Weise aus aliphatischen, cycloaliphatischen oder aromatischen Polycarbonsäuren bzw. ihren Anhydriden wie z.B. Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal- oder Trimellitsäure sowie Säureanhydride wie o-Phthal-, Trimellit- oder Bernsteinsäureanhydrid oder deren Gemisch mit mehrwertigen Alkoholen wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische, gegebenenfalls unter Mitverwendung höherfunktioneller Polyole wie Trimethylolpropan oder Glycerin, hergestellt werden können. Als mehrwertige Alkohole zur Herstellung der Polyesterpolyole kommen natürlich auch cycloaliphatische und/oder aromatische Polyhydroxylverbindungen in Frage. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden.

Selbstverständlich kann es sich bei den Polyesterpolyolen auch um Homo- oder Mischpolyadditionsverbindungen von Lactonen handeln, die vorzugsweise durch Anlagerung von Lactonen bzw. Lactongemischen wie Butyrolacton, ε-Caprolacton und/oder Methyl-ε-caprolacton an geeignete di- und/oder höherfunktionelle Startermoleküle, wie z.B. die vorstehend als Aufbaukomponenten für Polyesterpolyole genannten niedermolekularen, mehrwertigen Alkohole, erhalten werden. Die entsprechenden Polyadditionsverbindungen des ε-Caprolactons sind besonders bevorzugt.

Auch Hydroxylgruppen aufweisende Polycarbonate kommen als Polyhydroxylkomponenten b) in Betracht, z.B. solche, die durch Umsetzung von Diolen wie 1,4-Butandiol und/oder 1,6-Hexandiol mit Diarylcarbonaten, z.B. Diphenylcarbonat, oder Phosgen hergestellt werden können.

Als Polyetherpolyole seien z.B. die Polyadditionsprodukte der Styroloxide, des Ethylenoxids, Propylenoxids, Tetrahydrofurans, Butylenoxids, Epichlorhydrins sowie ihre Mischadditionsprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole genannt.

Selbstverständlich können auch Mischungen der oben beispielhaft aufgeführten Verbindungen als Aufbaukomponenten b) Verwendung finden.

Weiterhin können als Komponenten b) gegebenenfalls auch niedermolekulare Polyhydroxylverbindungen, bevorzugt Diole des Molekulargewichtsbereichs 62 bis 499, verwendet werden. Es kommen als solche beispielsweise die unter b) zur Herstellung der Polyesterpolyole genannten mehrwertigen, insbesondere zweiwertigen Alkohole sowie weiterhin niedermolekulare Polyesterdiole wie z.B. Adipinsäure-bis-(hydroxyethyl)-ester oder kurzkettige auf aromatischen Diolen gestartete Homo- und Mischpolyadditionsprodukte des Ethylenoxids oder des Propylenoxids in Frage. Beispiele für aromatische Diole, die als Starter für kurzkettige Homo- und Mischpolyadditionsverbindungen des Ethylenoxids oder des Propylenoxids Verwendung finden können, sind 1,4-, 1,3-, 1,2-Dihydroxybenzol oder 2,2-Bis-(4-hydroxyphenyl)-propan (Bisphenol A).

Diese Verbindungen werden zweckmäßig schon bei der Herstellung des NCO-Präpolymeren eingesetzt.

Zur Erzielung spezieller Effekte, beispielsweise zur Regelung des Molekulargewichts, können als Aufbaukomponenten monofunktionelle NCO-reaktive Verbindungen e) gegebenenfalls mitverwendet werden. Diese monofunktionellen Verbindungen e) werden selbstverständlich in Mengen eingesetzt, die den Eigenschaften der Endprodukte nicht abträglich sind. Als Beispiele solcher monofunktionellen Verbindungen e) kommen Ammoniak, Monoamine und einwertige Alkohole in Frage. Bevorzugte Monoamine sind z.B. Diethyl- und Dibutylamin. Bevorzugte einwertige Alkohole sind z.B. monofunktionelle Polyetheralkohole, insbesondere hydrophile Ethylenoxid-Homo- und -Co-additionsprodukte, vorzugsweise solche mit einem Gehalt an eingebauten Ethylenoxideinheiten, der dem erfindungsgemäßen modifizierten Polyharnstoff einen Gehalt an eingebauten Ethylenoxideinheiten von bis zu 30, insbesondere bis zu 10 Gew.-% verleiht. Der Einbau derartiger monofunktioneller Polyetheralkohole erfolgt zweckmäßigerweise bei der Präpolymerherstellung.

Besonders bevorzugt ist der Einbau von einwertigen Alkoholen, die gleichzeitig noch polymerisierbare Doppelbindungen enthalten. Diese Monoalkohole besitzen nicht nur molgewichtsregelnde Eigenschaften, sondern auch nach ihrem Einbau die Fähigkeit, an das aufzupfropfende Vinylpolymerisat kovalent anzubinden und so die Pfropfausbeute deutlich zu erhöhen. Von solchen Monoalkoholen mit polymerisierbaren Doppelbindungen seien z.B. (Meth)acrylsäure-2-hydroxyethylester und (Meth)acrylsäurehydroxypropylester genannt.

Beim Einsatz von Monoaminen e) als Kettenregler werden diese zweckmäßigerweise im Anschluß an die Kettenverlängerung mit Polyaminen c) eingesetzt. Dabei können diese Monoamine e) gegebenenfalls in bis zu den verbleibenden NCO-Gruppen rechnerisch äquivalenter Menge eingesetzt werden.

Als Aufbaukomponenten c) kommen aliphatische und/oder alicyclische primäre und/oder sekundäre Polyamine in Frage, beispielhaft seien genannt: 1,2-Ethandiamin, 1,6-Hexamethylendiamin, 1-Amino-3,3,5-trimethyl-5-aminomethyl-cyclohexan (Isophorondiamin), Piperazin, 1,4-Diaminocyclohexan, Bis-(4-aminocyclohexyl)-methan, Adipinsäuredihydrazid oder Diethylentriamin.

Weitere bevorzugte Polyamine c) umfassen Polyetherpolyamine, die formal durch Ersatz der Hydroxylgruppen der oben beschriebenen Polyetherpolyole b) durch Aminogruppen zustandekommen. Solche Polyetherpolyamine kann man durch Umsetzung der entsprechenden Polyetherpolyole mit Ammoniak und/oder primären Aminen herstellen.

Bevorzugt als Aufbaukomponente c) ist auch Hydrazin bzw. Hydrazinhydrat.

Als Aufbaukomponenten d) können gegebenenfalls auch Aminoalkohole, wie z.B. Ethanolamin, 2-Propanolamin, Diethanolamin oder N-(2-Hydroxyethyl)-ethylendiamin, Verwendung finden.

Auch durch Reaktion Präpolymerer mit Wasser f) zur Kettenverlängerung können hochmolekulare Polyharnstoffe erhalten werden.

Die genannten Aufbaukomponenten a) bis d) können gegebenenfalls auch anionische Carboxylat- und/oder Sulfonat-Gruppen enthalten und können in dieser modifizierten Form zumindest anteilig mitverwendet werden. Solche Aufbaukomponenten und deren Verwendung zur Herstellung anionischer Polyharnstoffe werden beispielsweise in Methoden der Organischen Chemie (Houben-Weyl), Bd. E 20, Thieme Verlag, Stuttgart 1989, S. 1659 ff. beschrieben.

Da jedoch durch diese modifizierten Aufbaukomponenten die Hydrophilie der Produkte nach dem Auftrocknen erhöht wird, ist eine Mitverwendung derartiger Aufbaukomponenten nur dann erwünscht, wenn durch ihre Mitverwendung, z.B. durch Synergieeffekte, die Gesamtmenge an hydrophilen Zentren im Produkt vermindert wird.

Selbstverständlich können auch in der Polyurethanchemie übliche Hilfs- und Zusatzstoffe, z.B. Katalysatoren, wie z.B. tertiäre Amine, metallorganische Verbindungen, einschließlich organischer Zinn- oder Titan-Verbindungen, weiterhin übliche Emulgatoren, Antioxidationsmittel oder Hydrolyseschutzmittel zu jedem beliebigen Zeitpunkt während der Herstellung der Polyharnstoffe zugesetzt werden.

Die Kettenverlängerung der NCO-Präpolymeren mit den Polyaminen c) erfolgt im allgemeinen bei Temperaturen zwischen 20 und 70°C, vorzugsweise bei 30 bis 60°C.

Die verbleibenden Isocyanatgruppen reagieren sofort oder im Verlauf der nachfolgenden Schritte unter Harnstoffbildung mit Wasser f), beziehungsweise nehmen in geringem Umfang an der Umsetzung mit Salzen des Cyanamids unter Bildung von Cyanharnstoffanionen (II) teil, deren Gehalt vorzugsweise jedoch weniger als 5 Milliäquivalenten, bezogen auf 100 g modifizierten Polyharnstoff beträgt.

Die Reaktionszeit kann zwischen wenigen Minuten bis zu einigen Stunden variieren. Insbesondere bei längeren Reaktionszeiten wird ein Großteil der verbleibenden Isocyanatgruppen durch Wasser unter Kettenverlängerung umgesetzt, so daß die Bildung von Cyanharnstoffanionen (II) minimiert wird.

Vorzugsweise werden die NCO-Präpolymeren vor der Umsetzung mit c) mit wassermischbaren, isocyanatunreaktiven, niedrig siedenden Lösemitteln verdünnt. Möglich ist ebenso die Verwendung von wasserunlöslichen Lösemitteln, z.B. von radikalisch polymerisierbaren Monomeren, die im Anschluß an die Herstellung der Polyharnstoffdispersion radikalisch polymerisiert werden können.

Als Verdünnungsmittel für die NCO-Präpolymeren kommen z.B. Lösemittel aus den Reihen der cyclischen Ether und offenkettigen Ketone, bevorzugt mit Siedepunkten unter 100°C in Frage, z.B. Tetrahydrofuran, Butanon, Aceton, besonders bevorzugt ist Aceton. Die Präpolymeren werden derartig verdünnt, daß 20 bis 70 gew.-%ige, bevorzugt 30 bis 50 gew.-%ige Lösungen entstehen.

Die Polyamine c) werden im allgemeinen in verdünnter organischer, vorzugsweise verdünnter wäßriger Lösung eingesetzt.

Dabei kann die Konzentration der Amin-Lösung in weiten Grenzen variiert werden. Bei der Verwendung von in Wasser gelösten Aminen ist jedoch darauf zu achten, daß die Kettenverlängerungsreaktion in homogener Phase abläuft. Wenn die Amine c) in organischer Lösung eingesetzt werden, gelten die bereits für wäßrige Lösungen genannten Parameter bezüglich Konzentration, Reaktionstemperatur und Reaktionszeit. Als organisches Lösemittel ist Aceton bevorzugt. Im Falle der Mitverwendung von Monoaminen e) gelten ebenfalls die oben genannten Bedingungen.

Die Umsetzung mit Salzen des Cyanamids (V) kann nach verschiedenen Varianten erfolgen. Einerseits ist es möglich, zunächst das Cyanamid in Lösung, bevorzugt in wäßriger Lösung, zuzugeben und anschließend die zur Neutralisation des Cyanamids erforderliche Base als Reinsubstanz oder als Lösung zuzugeben. Andererseits kann aber auch das Cyanamidsalz in wäßriger oder organischer Lösung zugegeben werden. Bevorzugtes organisches Lösemittel ist Aceton.

Die Reaktionstemperatur wird im allgemeinen zwischen 20 und 80°C, bevorzugt zwischen 30 und 60°C gehalten. Die Menge an eingesetztem Cyanamidsalz (V) beträgt zwischen 50 und 100 %, bevorzugt zwischen 70 und 95 % der Äquivalenzmenge, bezogen auf Gesamtgehalt an reaktiven Gruppen (III) und/oder (IV) im Polyharnstoff. Nach der Umsetzung mit Cyanamidsalz (V) gegebenenfalls noch vorhandene reaktive Gruppen (III) und/oder (IV) können gegebenenfalls, wie in US 4 546 153 beschrieben, mit Aminen vernetzt werden. Die Reaktionszeit beträgt im allgemeinen zwischen wenigen Minuten und einigen Stunden. Im Falle der bevorzugten Oxadiazintrionstrukturen ist der Reaktionsverlauf leicht zu verfolgen. Die Reaktion ist abgeschlossen, wenn die Kohlendioxidentwicklung beendet ist. Falls wäßrig gearbeitet wird, sollte die Wassermenge so bemessen sein, daß das Reaktionssystem einphasig bleibt; jedoch ist dies weniger kritisch zu sehen als bei der Kettenverlängerungsreaktion; eine beginnende Zweiphasigkeit kann eventuell toleriert werden.

Zur Neutralisation des Cyanamids sind sowohl anorganische Basen, wie z.B. Ammoniak, Natriumhydroxid oder -carbonat als auch organische, wie z.B. tertiäre Amine, wie z.B. Triethylamin, Trimethylamin, Trisisopropylamin, Tri-n-butylamin, N,N-Dimethylaminoethanol, Trisisopropanolamin, Pyridin oder N-Methylmorpholin einsetzbar. Bevorzugt sind flüchtige Basen, insbesondere Ammoniak und Triethylamin.

Nach Beendigung der Umsetzung mit den Cyanamidsalzen (V) kann das erhaltene Reaktionsprodukt durch Verdünnen mit Wasser und destillativer Entfernung der eingesetzten organischen Lösungsmittel in eine Dispersion überführt werden.

Zur Herstellung der NCO-Präpolymeren sind prinzipiell alle in der PUR-Chemie bekannten Varianten möglich, so daß gewünschte Hart- und Weichsegmentlängen und Verteilungen zwanglos eingestellt werden können.

Die Pfropfmonomeren A umfassen
a) α,β-olefinisch ungesättigte Monocarbonsäuren mit 3 bis 5 C-Atomen und deren Ester bzw. Nitrile und Amide wie Acryl-, Methacryl- und Crotonsäure, Acryl- und Methacrylsäureamide, Acryl- und Methacrylnitril, Ester der Acryl- und Methacrylsäure, insbesondere solche mit gesättigten einwertigen aliphatischen oder cycloaliphatischen Alkoholen mit 1 bis 20 Kohlenstoffatomen, wie Ester der genannten Säuren mit Methyl-, Ethyl-, Propyl-, Isopropyl-, n-Butyl-, Isobutyl-, Hexyl-, 2-Ethylhexyl-, Octyl-, Stearylalkohol, Cyclohexanol, Methylcyclohexanol, ferner mit Benzylalkohol, Phenol, Kresol, Furfurylalkohol, Monoester von α,β-monoolefinisch ungesättigten Monocarbonsäuren mit 3 bis 4 C-Atomen mit zweiwertigen gesättigten aliphatischen Alkoholen mit 2 bis 4 C-Atomen, wie beispielsweise 2-Hydroxyethylmethacrylat, Hydroxypropylmethacrylat, 4-Hydroxybutylmethacrylat, 2-Hydroxyethylacrylat, Hydroxypropylacrylat, 4-Hydroxybutylacrylat; Glycidylester der Acryl- und Methacrylsäure, wie Glycidylmethacrylat;
   (Auch Monomere mit zwei oder mehr Doppelbindungen im Molekül können eingesetzt werden. Hiermit können dann hochverzweigte bzw. vernetzte Polymerpartikel, sogenannte Mikrogele, erhalten werden. Als solche Monomere sind z.B. Ethylenglykoldiacrylat oder -methacrylat geeignet),
b) α,β-olefinisch ungesättigte Dicarbonsäuren mit 3 bis 5 C-Atomen und ihre Derivate wie Fumarsäure, Maleinsäure, Itaconsäure, Mono- und Diester der vorgenannten Dicarbonsäuren mit 1 bis 18 C-Atomen im Alkoholrest, wie Maleinsäuredimethylester, Maleinsäurediethylester, Maleinsäuredibutylester, Maleinsäuremonohexylester, Maleinsäuremonocyclohexylester;
c) Ester des Vinylalkohols mit Carbonsäuren oder mit Halogenwasserstoffsäuren, Vinylether, Vinylketone, Vinylamide, wie Vinylacetat, Vinylpropionat, Vinyllaurat, Vinylstearat, Vinylbenzoat, Chlorvinylacetat, Divinyladipat, Vinylchlorid, Vinylidenchlorid, Vinylethylether, Vinylbutylether, Vinylisobutylether, Vinylethylketon, Vinylformamid, N-Vinylacetamid;
d) Vinylverbindungen von Aromaten und Heterocyclen, wie Styrol, α-Methylstyrol, Vinyltoluol, p-Chlorstyrol, Divinylbenzol, 2-Vinylpyrrolidon, 2-Vinylpyridin;
e) N-Methylolether des Acrylsäure- und Methacrylsäureamids der Formel 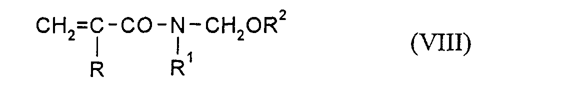 in der
   - R: für Wasserstoff oder Methyl,
   - R¹: für Wasserstoff, Alkyl, Aralkyl oder Aryl,
   - R²: für Alkyl oder Cycloalkyl, wie z.B. Methyl, Ethyl, n-Propyl, Isopropyl, n-Butyl, Isobutyl, Cyclohexyl stehen (vgl. DE-B-1 035 363), ferner die nicht veretherten N-Methylolverbindungen des Acryl- und Methacrylsäureamids;
f) Mannich-Basen des Acrylsäure- und Methacrylsäureamids der Formel 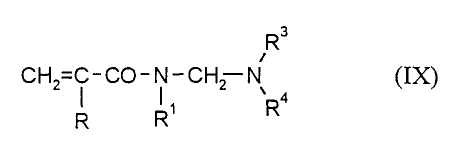 in der
   - R und R¹: die gleiche Bedeutung wie in der Formel (I) haben und
   - R³ und R⁴: für Alkyl, Cycloalkyl oder gemeinsam für einen heterocyclischen Rest, wie den Morpholinrest, stehen;
   (Geeignete Verbindungen dieses Typs sind in der DE-B-1 102 404 genannt.)
g) Acryl- und Methacrylsäurederivate mit einer endständigen Halogenmethylcarbonylgruppe der Formel 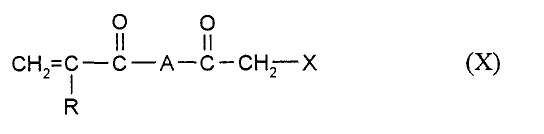 R = H, CH₃ 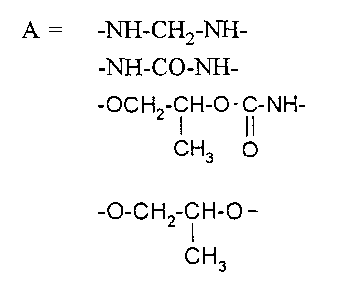 X = Cl, Br
   (vgl. BE-A-696 010);
h) Allylverbindungen, wie Triallylcyanurat, Triallylphosphat, Allylalkohol, Allylamin;
i) Monoolefinisch ungesättigte aliphatische Kohlenwasserstoffe mit 2 bis 6 C-Atomen, wie Ethylen, Propylen, Butylen, Isobutylen;
j) Konjugierte Diolefine mit 4 bis 6 C-Atomen, wie Butadien, Isopren, 2,3-Dimethylbutadien, Chlorbutadien;
k) ferner Norbornen und Hydroxymethylnorbornen.

Vorzugsweise werden eingesetzt: Acryl- und Methacrylsäureester mit 1 bis 12 C-Atomen im Alkoholrest, Acrylsäure, Methacrylsäure sowie die C₂-C₄-Hydroxyalkylester dieser Säuren, Styrol, Acryl- und Methacrylsäurenitril, Vinylacetat, Vinylpropionat in Verbindung mit einem oder mehreren der aufgeführten Monomeren.

Die Polymerisation erfolgt im allgemeinen bei Temperaturen von 10 bis 150°C, vorzugsweise bei 40 bis 130°C.

Als Initiatoren kommen im allgemeinen 0,05 bis 5 Gew.-%, bezogen auf die Monomeren, in Radikale zerfallende Initiatoren in Frage. Solche Initatoren sind z.B. organische Peroxide, wie z.B. Lauroylperoxid, Cyclohexanonhydroperoxid, tert.-Butyl-peroctoat, tert.-Butyl-perpivalat, tert.-Butylperbenzoat, Dichlorbenzoylperoxid, Dibenzoylperoxid, Di-tert-butylperoxid, tert.-Butylhydroperoxid, Cumolhydroperoxid, Peroxycarbonate, wie Di-iso-propyl-peroxydicarbonat, Dicyclohexylperoxydicarbonat, Diisooctyl-peroxydicarbonat, Sulfonylperoxide wie Acetylcyclohexyl-sulfonylperacetat, Sulfonylhydrazide, Azoverbindungen wie Azodiisobuttersäuredinitril sowie wasserlösliche Azoverbindungen, wie sie z.B. in der DE-A 2 841 045 beschrieben sind.

Anorganische Peroxide, wie Wasserstoffperoxid, Kaliumperoxodisulfat und Ammoniumperoxodisulfat sind ebenfalls geeignet.

Die in Radikale zerfallenden Initiatoren können allein oder auch in Verbindung mit Reduktionsmitteln oder Schwermetallverbindungen eingesetzt werden. Solche Verbindungen sind beispielsweise Natrium- oder Kaliumpyrosulfit, Ameisensäure, Ascorbinsäure, Thioharnstoff, Hydrazin- bzw. Aminderivate und Rongalit. Die Schwermetallverbindungen können sowohl in öllöslicher als auch in wasserlöslicher Form vorliegen. Wasserlösliche Schwermetallverbindungen sind beispielsweise Silbernitrat, Halogenide oder Sulfate des 2- oder 3-wertigen Eisens, Kobalts, Nickels, Salze des Titans oder Vanadins in niedrigeren Wertigkeitsstufen. Öllösliche Schwermetallverbindungen sind beispielsweise Kobaltnaphthenat oder die Acetylacetonkomplexe des Vanadins, Kobalts, Titans, Nickels oder des Eisens.

Die Polymerisation wird im allgemeinen bei pH-Werten von 2 bis 10 durchgeführt. Nach beendeter Polymerisation wird im Fall eines pH-Werts unter 7 mit Neutralisationsmitteln wie z.B. Ammoniak und Aminen auf pH-Werte zwischen 7 und 9 eingestellt.

Zur Regulierung der Molekulargewichte der Polymeren können noch übliche Regler eingesetzt werden, z.B. n-Dodecylmercaptan, t-Dodecylmercaptan, Diisopropylxanthogendisulfid, Thioglykol und Thioglycerin. Sie werden im allgemeinen in Mengen von 0,1 bis 2 Gew.-%, bezogen auf die Monomermischung, zugegeben.

Die Emulsionspolymerisation im wäßrigen Medium kann nach bekannten Polymerisationsverfahren sowohl diskontinuierlich als auch kontinuierlich oder im Zulaufverfahren durchgeführt werden.

Besonders bevorzugt sind das kontinuierliche und das Zulaufverfahren. Bei letzterem wird unter Stickstoffatmosphäre Wasser zusammen mit einem Teil oder der gesamten Menge an Polyharnstoffdispersion und gegebenenfalls einem Teil des Monomergemischs evtl. mit zusätzlichem anionischem oder nichtionischem Emulgator vorgelegt, auf die Polymerisationstemperatur erhitzt und das Monomergemisch sowie der Initiator und gegebenenfalls Polyharnstoffdispersion sowie Emulgator innerhalb von 0,5 bis 10 Stunden, bevorzugt 1 bis 6 Stunden, zugetropft.

Nach einiger Zeit wird nachaktiviert und die Reaktion bis zu einem Umsatz von ca. 99,0 % bis 99,9 Gew.-% vervollständigt. Restmonomere sowie evtl. noch vorhandene organische Lösungsmittel können im Anschluß an die Emulsionspolymerisation evtl. mit dem vorliegenden Wasser oder einem Teil davon im Vakuum destillativ entfernt werden. Danach kann gegebenenfalls weiteres Wasser zugesetzt werden, so daß als Verfahrensprodukte 10 bis 60 gew.-%ige, vorzugsweise 20 bis 50 gew.-%ige Dispersionen resultieren.

Die mittels Laser-Streulicht-Korrelationsspektroskopie gemessenen mittleren Teilchendurchmesser liegen je nach Reaktionsbedingungen zwischen 20 und 1.000 nm, vorzugsweise zwischen 50 und 500 nm. Dispersionen mit Teilchengrößen unter 50 nm erscheinen transparent, während solche mit größeren Teilchen zunehmend trüb erscheinen.

Die Dispersionen können mit gleichgeladenen Dispersionen abgemischt werden, wie z.B. mit Polyvinylacetat-, Polyethylen-, Polystyrol-, Polybutadien-, Polyvinylchlorid- und Polyacrylat-Dispersionen.

Schließlich können auch Füllstoffe, Weichmacher, Pigmente, Fluß- und Kieselsäuresole, Aluminium-, Ton-, Asbest-Dispersionen eingearbeitet werden.

Die erfindungsgemäßen Verfahrensprodukte stellen stabile, lager- und versandfähige wäßrige Dispersionen dar und können zu beliebig späterem Zeitpunkt formgebend verarbeitet werden. Sie trocknen im allgemeinen unmittelbar zu formstabilen Kunststoffüberzügen auf. Die Formgebung der Verfahrensprodukte kann auch in Gegenwart von an sich bekannten Vernetzungsmitteln erfolgen. Dazu werden im Verlauf des Verfahrens den Pfropfpolymerisaten polyfunktionelle, vernetzend wirkende Substanzen zugesetzt, die nach Verdunsten des gegebenenfalls vorhandenen Lösungsmittels bei Raum- oder erhöhter Temperatur chemische Vernetzung bewirken. Genannt seien: Schwefel, freie und partiell oder vollständig verkappte Polyisocyanate, Carbodiimide, Formaldehyd oder Formaldehyd-abgebende Substanzen, Melaminharze, Methylolverbindungen und deren Ether, organische und anorganische Peroxide.

Wie bereits oben ausgeführt, können bei erhöhter Temperatur selbstvernetzende Dispersionen dann erhalten werden, wenn bei der Herstellung der Polyharnstoffe durch Mitverwendung von Blockierungsmitteln für Isocyanatgruppen der genannten Art in die Polyharnstoffe blockierte Isocyanatgruppen eingebaut werden.

Von besonderem Interesse ist der Einsatz nicht blockierter Polyisocyanate, wenn z.B. Hydroxylgruppen enthaltende Pfropfpolymerisate vorliegen. Gemäß EP-A 358 979 können nach Applikation dieses Zweikomponentensystems Polyurethannetzwerke entstehen.

Die gegebenenfalls gelösten oder angeschlämmten Vernetzer, Füllstoffe, Verdicker, Pigmente und sonstigen Zusatzstoffe können im Verlauf des Verfahrens zugefügt werden.

Die nach dem erfindungsgemäßen Verfahren erhältlichen wäßrigen Dispersionen sind vielfältig anwendbar.

So können Tauchartikel, nach dem Latex-Schaumschlagverfahren Schaumstoffe, durch Elektrolytzusatz zu den wäßrigen Dispersionen Koagulate, die auf der Mischwalze verarbeitet werden können, und durch Verdunsten des Wassers klebfreie und klebende Filme oder Folien erhalten werden. Die Verfahrensprodukte sind zur Beschichtung bzw. zum Überziehen und zum Imprägnieren von gewebten und nichtgewebten Textilien, Leder, Metallen, Keramik, Stein, Beton, Bitumen, Hartfaser, Stroh, Glas, Porzellan, Kunststoffen der verschiedensten Art, Glasfasern, zur antistatischen und knitterfreien Ausrüstung, als Binder für Vliese, Klebstoffe, Haftvermittler, Kaschierungsmittel, Hydrophobiermittel, Weichmacher, Bindemittel, z.B. für Kork- oder Holzmehl, Glasfasern, Asbest, Plastik- oder Gummiabfälle, keramische Materialien, als Hilfsmittel im Zeugdruck als Zusatz zu Polymerisat-Dispersionen, als Schlichtemittel und zur Lederausrüstung geeignet.

Bevorzugt ist der Einsatz dieser Dispersionen für wäßrige Lacksysteme sowie zur Beschichtung von flexiblen Substraten wie Leder.

Die Prozentangaben in den nachfolgenden Beispielen bedeuten Gewichtsprozente; Teile sind Gewichtsteile.

### Beispiele

### Herstellung der Polyharnstoff-Dispersionen

### Beispiel 1

In einem 100 1-Kessel mit Rührwerk und Umlaufheizung werden 8,5 kg eines difunktionellen Hexandiolpolycarbonates (OH-Zahl = 56) und 2,7 kg eines Bisphenol A-gestarteten Polypropylenoxiddiols (OH-Zahl = 200) bei 110 bis 120°C unter 120 mbar und Rühren 60 Minuten entwässert. Anschließend wird das Vakuum mit Stickstoff gebrochen. Nach Abkühlen auf 80°C werden 53 g 2-Ethylhexanol und 10 Minuten später 1,6 kg Isophorondiisocyanat, 0,61 kg Hexamethylendiisocyanat und 1,78 kg 3,5-Bis-(6-isocyanatohexyl)-2,4,6-trioxotetrahydro-1,3,5-oxadiazin (technisches Produkt, MG = 420) zugegeben. Nach 6 Stunden Rühren bei 80°C ist ein konstanter Isocyanatgehalt von 3,05 % erreicht. Es wird mit 28,5 kg Aceton verdünnt und auf 45 bis 50°C abgekühlt. In die Lösung läßt man eine Lösung bestehend aus 0,26 kg Isophorondiamin, 64 g Hydrazinhydrat, 0,18 kg Natrium-N-(2-aminoethyl)-2-aminoethan-sulfonat und 1,65 kg entionisiertem Wasser einlaufen. 15 Minuten später läßt man 2,30 kg einer 10 %igen wäßrigen Cyanamidlösung zulaufen. Weitere 10 Minuten später gibt man 0,57 kg Triethylamin zu. Nach einer Stunde Rühren bei 40 bis 50°C wird die Rührerleistung auf maximale Geschwindigkeit reguliert und mit 27,5 kg entionisiertem Wasser dispergiert. Anschließend wird das Aceton im Vakuum (120 mbar) abdestilliert. Man erhält eine feinteilige Dispersion mit einem Feststoffgehalt von 35 ± 1 % und einer Auslaufviskosität von 17 s (DIN-Becher, 4 mm).

### Beispiel 2

In einem 100 1-Kessel mit Rührwerk und Umlaufheizung werden 7,2 kg eines difunktionellen Hexandiolpolycarbonates (OH-Zahl = 56) und 2,27 kg eines Bisphenol A-gestarteten Polypropylenoxiddiols (OH-Zahl = 200) bei 110 bis 120°C unter 120 mbar und Rühren 60 Minuten entwässert. Anschließend wird das Vakuum mit Stickstoff gebrochen. Nach Abkühlen auf 80°C werden 1,36 kg Isophorondiisocyanat, 0,54 kg Hexamethylendiisocyanat und 1,36 kg 3,5-Bis-(6-isocyanatohexyl)-2,4,6-trioxotetrahydro-1,3,5-oxadiazin (technisches Produkt, MG = 420) zugegeben. Nach 6 Stunden Rühren bei 80°C ist ein konstanter Isocyanatgehalt von 3,10 % erreicht. Anschließend wird auf 70°C abgekühlt und 0,50 kg Hydroxyethylmethacrylat zugegeben. Nach 3 Stunden wird mit 24 kg Aceton verdünnt und auf 45 bis 50°C abgekühlt. In die Lösung läßt man eine Lösung bestehend aus 0,125 kg Isophorondiamin, 25 g Hydrazinhydrat, 0,165 kg Natrium-N-(2-aminoethyl)-2-aminoethan-sulfonat und 2,7 kg entionisiertem Wasser einlaufen. 15 Minuten später läßt man 1,77 kg einer 10 %igen wäßrigen Cyanamidlösung zulaufen. Weitere 10 Minuten später gibt man 0,44 kg Triethylamin zu. Nach einer Stunde Rühren bei 40 bis 50°C wird die Rührerleistung auf maximale Geschwindigkeit reguliert und mit 24 kg entionisiertem Wasser dispergiert. Anschließend wird das Aceton im Vakuum (120 mbar) abdestilliert. Man erhält eine feinteilige Dispersion mit einem Feststoffgehalt von 35 ± 1 % und einer Auslaufviskosität von 15 s (DIN-Becher, 4 mm).

### Beispiel 3

In einem 100 1-Kessel mit Rührwerk und Umlaufheizung werden 8,64 kg eines difunktionellen Hexandiolpolycarbonates (OH-Zahl = 56) und 2,85 kg eines Bisphenol A-gestarteten Polypropylenoxiddiols (OH-Zahl = 200) bei 110 bis 120°C unter 120 mbar und Rühren 60 Minuten entwässert. Anschließend wird das Vakuum mit Stickstoff gebrochen. Nach Abkühlen auf 80°C werden 50 g 2-Ethylhexanol, 1,63 kg Isophorondiisocyanat, 0,62 kg Hexamethylendiisocyanat und 1,78 kg 3,5-Bis-(6-isocyanatohexyl)-2,4,6-trioxotetrahydro-1,3,5-oxadiazin (technisches Produkt, MG = 420) zugegeben. Nach 6 Stunden Rühren bei 80°C ist ein konstanter Isocyanatgehalt von 3,10 % erreicht. Es wird mit 36 kg Aceton verdünnt und auf 45 bis 50°C abgekühlt. In die Lösung läßt man eine Lösung bestehend aus 0,365 kg Isophorondiamin und 90 g Hydrazinhydrat, in 2,7 kg entionisiertem Wasser einlaufen. 15 Minuten später läßt man 2,25 kg einer 10 %igen wäßrigen Cyanamidlösung zulaufen. Weitere 10 Minuten später gibt man 0,54 kg Triethylamin zu. Nach einer Stunde Rühren bei 40 bis 50°C wird die Rührerleistung auf maximale Geschwindigkeit reguliert und mit 31,7 kg entionisiertem Wasser dispergiert. Anschließend wird das Aceton im Vakuum (120 mbar) abdestilliert. Man erhält eine feinteilige Dispersion mit einem Feststoffgehalt von 30 ± 1 % und einer Auslaufviskosität von 20 s (DIN-Becher, 4 mm).

### Herstellung der Pfropfpolymerisate

### Beispiele A bis D

In einem 2 1-Planschliffkolben mit Blattrührer, Rückflußkühler, Gaseinlaß und -auslaß sowie Vorrichtungen zur Dosierung von Monomeren und Initiatorlösungen werden die Mischungen I (vgl. Tabelle 1) vorgelegt. Es wird 30 Minuten mit Stickstoff gespült und unter Rühren auf eine Innentemperatur von 80°C erwärmt. Dann wird sehr schnell der Initiator II zugegeben. Anschließend werden im Verlauf von 2 Stunden die Monomermischungen III gleichmäßig zudosiert. Danach wird 1 Stunde nachgerührt und mit IV nachaktiviert. Es wird 4 Stunden nachgerührt und anschließend im Wasserstrahlvakuum bei 100 bis 400 mbar Innendruck andestilliert und Restmonomere entfernt. 20 bis 30 ml Kondensat werden aufgefangen. Anschließend wird die Dispersion abgekühlt und durch ein Filtertuch mit einer Maschenweite von 100 µm filtriert. Anschließend werden die in Tabelle 1 angegebenen physikalisch-chemischen Kenndaten bestimmt.

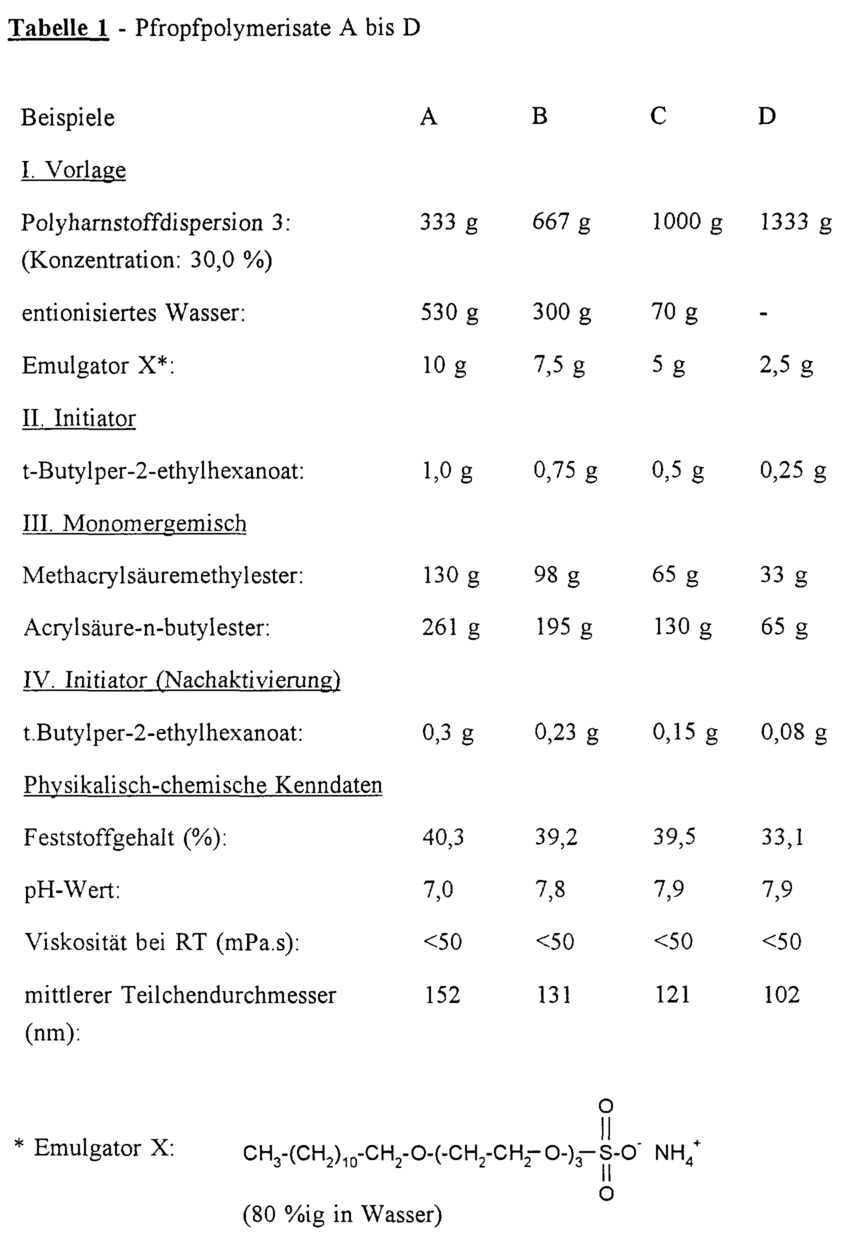

### Beispiele E bis L

In einem 2 1-Planschliffkolben mit Blattrührer, Rückflußkühler, Gaseinlaß und -auslaß sowie Vorrichtungen zur Dosierung von Monomeren und Initiatorlösungen werden die Mischungen I (vgl. Tabelle 2) vorgelegt. Es wird 30 Minuten mit Stickstoff gespült und unter Rühren auf eine Innentemperatur von 80°C erwärmt. Dann wird sehr schnell der Initiator II zugegeben.

Anschließend werden im Verlauf von 2 Stunden die Monomermischungen III gleichmäßig zudosiert. Danach wird 1 Stunde nachgerührt und mit IV nachaktiviert. Es wird 4 Stunden nachgerührt und anschließend im Wasserstrahlvakuum bei 100 bis 400 mbar Innendruck andestilliert und Restmonomere entfernt. 20 bis 30 ml Kondensat werden aufgefangen. Anschließend wird die Dispersion abgekühlt und durch ein Filtertuch mit einer Maschenweite von 100 µm filtriert. Anschließend werden die in Tabelle 2 angegebenen physikalisch-chemischen Kenndaten bestimmt.

**Tabelle 2 -**

| Pfropfpolymerisate E bis L | | | | | | | | |
|---|---|---|---|---|---|---|---|---|
| Beispiele | E | F | G | H | I | J | K | L |
| I. Vorlage | | | | | | | | |
| Polyharnstoffdispersion 1: (Konzentration: 34,2 %) | 585 g | 585 g | 585 g | 585 g | 585 g | 585 g | 585 g | 585 g |
| entionisiertes Wasser: | 780 g | 780 g | 780 g | 780 g | 780 g | 780 g | 780 g | 780 g |

| II. Initiator | | | | | | | | |
|---|---|---|---|---|---|---|---|---|
| t-Butylper-2-ethylhexanoat: | 0,75 g | 0,75 g | 0,75 g | 0,75 g | 0,75 g | 0,75 g | 0,75 g | 0,75 g |

| III. Monomermischung | | | | | | | | |
|---|---|---|---|---|---|---|---|---|
| Methacrylsäuremethylester: | 296 g | 251,6 g | 207,2 g | 162,8 g | 118,4 g | 74 g | 29,6 g | - |
| Acrylsäure-n-butylester: | - | 44,4 g | 88,8 g | 133,2 g | 177,6 g | 222 g | 266,4 g | 296 g |
| Emulgator X*: | 3,75 g | 3,75 g | 3,75 g | 3,75 g | 3,75 g | 3,75 g | 3,75 g | 3,75 g |

| IV. Initiator (Nachaktivierung) | | | | | | | | |
|---|---|---|---|---|---|---|---|---|
| t-Butylper-2-ethylhexanoat | 0,25 g | 0,25 g | 0,25 g | 0,25 g | 0,25 g | 0,25 g | 0,25 g | 0,25 g |

| Physikalisch-chemische Kenndaten | | | | | | | | |
|---|---|---|---|---|---|---|---|---|
| Feststoffgehalt (Gew.-%): | 29,4 | 29,5 | 29,6 | 29,6 | 29,6 | 29,8 | 27,9 | 28,9 |
| pH-Wert: | 8,7 | 8,7 | 8,7 | 8,3 | 8,7 | 8,6 | 8,8 | 8,3 |
| Viskosität bei RT (mPa.s): | 100 | 100 | 100 | 100 | 100 | 100 | 100 | 100 |
| mittlerer Teilchendurchmesser (nm): | 85 | 85 | 84 | 84 | 94 | 79 | 79 | 75 |

| | | | | | | | | |
|---|---|---|---|---|---|---|---|---|
| * siehe bei Tabelle 1. | | | | | | | | |

### Anwendungstechnischer Teil

### A) Grundierungen:

Es wird eine Mischung aus 50 Tl. einer handelsüblichen Rußformulierung (® EUDERM Grundschwarz D-C); 50 Tl. einer handelsüblichen binderarmen Silikatmattierung (® EUDERM Mattierung SN); 50 Tl. eines handelsüblichen trockenstellenden und füllenden Prägehilfsmittels (® EUDERM Nappa Soft S); 300 Tl. des Grundierbinders und 500 Tl. Wasser hergestellt. Die Mischung wird mit 50 Tl. eines handelsüblichen Polyurethanverdickers (® BAYDERM Additiv VL) auf eine Auslaufviskosität von 15 bis 17 sec (Fordbecher, 4 mm Düse) gebracht und ist dann spritzfertig.

Zur Herstellung der Prüflinge wird die den jeweiligen Binder enthaltende Formulierung auf unzugerichtetes Rind-Möbelnappa so aufgespritzt, daß pro Spritzauftrag eine Menge von 20 g der Formulierung pro Quadratfuß aufgebracht wird. Man spritzt einmal, bügelt bei 85°C und 50 bar (Durchlaufbügelmaschine, Vorschub 6 cm pro sec), überspritzt noch zweimal, trocknet 5 min bei 50°C und trägt abschließend noch hauchdünn eine 1:1-Abmischung eines handelsüblichen Emulsionslacks (® ISODERM LA 85) mit Wasser auf. Nach dem Trocknen werden die Prüflinge bei 80°C mit einem Druck von 300 bar 4 sec geprägt.

Die physikalischen Lederechtheiten werden gemäß DIN 53 351 (Knickechtheiten) bzw. DIN 53 399 (Reibechtheiten) ermittelt.

Es werden folgende Resultate erhalten:

| Grundierbinder | Trockenknick | Naßknick | Kälteknick -10°C | Kälteknick -25°C | Naßreibungen |
|---|---|---|---|---|---|
| Beispiel L | 100 000/o | 20 000/o | 10 000/o | 10 000/o | 50 / 4,x |

### B) Appreturen

Auf unzugerichtetes Rind-Möbelnappa wird eine Grundierung wie folgt aufgebracht:

Das Leder wird zuerst mit einer Formulierung aus 300 Tl. eines handelsüblichen Polyurethan-Haftgrunds (® BAYDERM Vorgrund APV); 100 Tl. Isopropanol und 600 Tl. Wasser (ein Kreuz spritzen) vorgrundiert.

Zur Grundierung wird eine Mischung aus 75 Tl. ® EUDERM Grundschwarz D-C; 75 Tl. eines trockenstellenden Verlaufshilfsmittels (® EUDERM Filler VF-01); 50 Tl. eines weich stellenden Antiklebemittels (®BAYDERM Soft Q); 150 Tl. einer handelsüblichen weichen Acrylat-Dispersion (® EUDERM Dispersion 32 AN); 150 Tl. einer mittelharten Polyurethan-Dispersion (® BAYDERM Grund 50 UD) und 475 Tl. Wasser hergestellt. Diese Mischung wird zweimal (je ein Kreuz) auf das vorgrundierte Leder gespritzt. Man trocknet 5 min bei 70°C. Das Leder wird hydraulisch gebügelt (80°C, 200 bar, 6 sec) und danach wird ein weiterer Spritzauftrag obiger Mischung (ein Kreuz) appliziert. Nach Trocknung wird erneut gebügelt (80°C, 50 bar, Kissplate). Das so grundierte Leder wird als Substrat zur Herstellung der Prüflinge eingesetzt. Die erfindungsgemäßen als Appreturbinder geeigneten Latices, werden jeweils mit Wasser auf einen Feststoffgehalt von 10 % verdünnt und mit ® BAYDERM Additiv VL auf eine Auslaufviskosität von 17 sec gestellt. Die resultierenden Formulierungen werden in einer Menge von 20 g pro Quadratfuß auf das Substrat gespritzt. Die Prüflinge werden 5 min bei 80°C getrocknet und dann gebügelt (Durchlaufbügelmaschine; 85°C, 50 bar, Vorschub 6 cm pro sec).

Die physikalischen Echtheiten sind wie folgt:

| Appreturbinder | Trockenknickung | Naßknickung | Naßreibung |
|---|---|---|---|
| Beispiel F | 100 000 / o | 20 000 / o | 1000 / 4,x |
| Beispiel G | 100 000 / o | 20 000 / o | 8000 / 5,x |
| Beispiel H | 100 000 / o | 20 000 / o | 1000 / 3-4,x |
| Beispiel C | 100 000 / o | 20 000 / o | 1000 / 4-5, o-x |

### Vergleichsversuche

### V1

Es wird wie im "Anwendungstechnischen Teil" unter "B) Appreturen" beschrieben verfahren, wobei die als Beispiel 3 genannte Polyurethanharnstoff-Dispersion unbepfropft und ohne Vernetzungsmittel eingesetzt wird. Folgende physikalische Echtheiten werden erhalten:

| Trockenknickung | Naßknickung | Naßreibung |
|---|---|---|
| 100 000 / o | 20 000 / o | 280 / 3-4,x |

Auffällig ist hier das deutlich niedrigere Niveau des reinen Polyurethanharnstoffs bei der Naßreibung im Vergleich mit den obigen Pfropfpolymerisaten.

## Patentansprüche

1. Verfahren zur Herstellung von Pfropfpolymerisaten aus
A. 5 bis 95 Gew.-Teilen polymerisierbaren olefinisch ungesättigten Monomeren als Pfropfmonomere auf
B. 95 bis 5 Gew.-Teile Polyharnstoff, der pro 100 g B 10 bis 100 Milliäquivalente der Gruppe 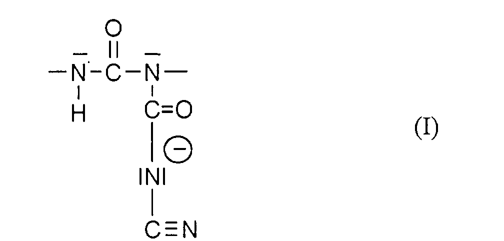 und gegebenenfalls bis zu 50 Milliäquivalente der Gruppe 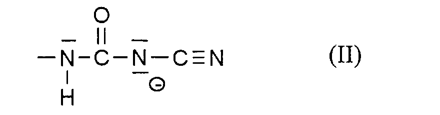 enthält, als Pfropfgrundlage,
wonach man Monomer A in Gegenwart der Pfropfgrundlage B und Radikal-bildender Polymerisationsinitiatoren in wäßriger Emulsion polymerisiert.

2. Nach Verfahren gemäß Anspruch 1 erhältliche Pfropfpolymerisate mit einem als Zahlenmittel bestimmten Molekulargewicht von 10³ bis 5 · 10⁵.

3. Verwendung der nach Verfahren gemäß Anspruch 1 erhältlichen Pfropfpolymerisate als Bindemittel bei der Beschichtung beliebiger Substrate.

## Claims

1. Process for preparing graft polymers of
A. from 5 to 95 parts by weight of polymerisable olefinically unsaturated monomers as graft monomers on
B. from 95 to 5 parts by weight of polyurea, containing per 100 g of B from 10 to 100 milliequivalents of the group 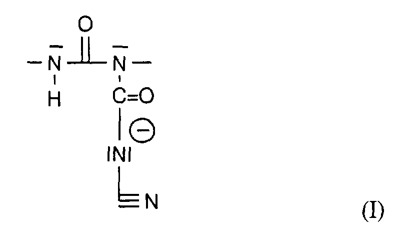 and optionally up to 50 milliequivalents of the group 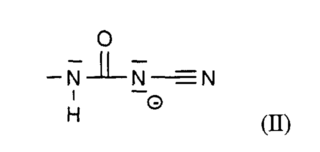 as graft base,
in accordance with which monomer A is polymerized in aqueous emulsion in the presence of the graft base B and of polymerisation initiators which form free radicals.

2. Graft polymers obtainable by the process according to Claim 1, having a number-average molecular weight of from 10³ to 5 · 10⁵.

3. Use of the graft polymers obtainable by the process according to Claim 1 as binders in the coating of any desired substrates.

## Revendications

1. Procédé pour la préparation de polymères greffés à partir de
A. 5 à 95 parties en poids de monomères à insaturation oléfinique polymérisables, appliqués par greffage sur
B. 95 à 5 parties en poids d'une polyurée contenant, pour 100 g de son poids, 10 à 100 milliéquivalents de groupes 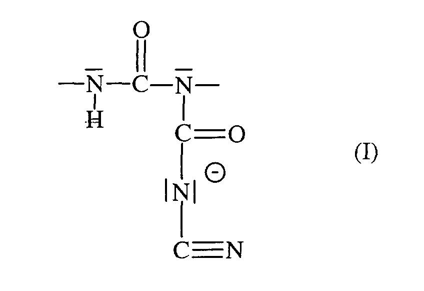 et le cas échéant jusqu'à 50 milliéquivalents de groupes 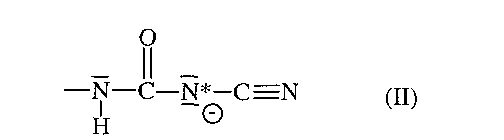 constituant le support de greffage,
par polymérisation en émulsion aqueuse des monomères A en présence du support de greffage B et d'inducteurs de polymérisation radicalaires

2. Polymères greffés obtenus par le procédé de la revendication 1, à un poids moléculaire moyen, moyenne en nombre, de 10³ à 5 x 10⁵.

3. Utilisation des polymères greffés obtenus par le procédé de la revendication 1 en tant que liants pour le revêtement de supports quelconques.
